# EUROPEAN PATENT SPECIFICATION

(11) **EP 2 531 740 B1**
(45) Date of publication and mention of the grant of the patent: **30.06.2021**
(21) Application number: 11737374.6
(22) Date of filing: 31.01.2011
(51) Int. Cl.: F16D 48/06, B60W 10/02, B60W 10/11, B60W 30/186, B60W 50/00

(54) **METHOD FOR CONTROLLING A VEHICLE COMPRISING A CLUTCH**
VERFAHREN ZUR STEUERUNG EINES FAHRZEUGS UMFASSEND EINE KUPPLUNG
PROCÉDÉ DE CONTRÔLE D'UN VÉHICULE COMPRENANT UN EMBRAYAGE

(30) Priority: 01.02.2010 SE 1050098
(43) Date of publication of application: 12.12.2012
(73) Proprietor: Scania CV AB, 151 87 Södertälje (SE)
(72) Inventor: JUHLIN-DANNFELT, Peter, S-126 36 Hägersten (SE); BOSTRÖM, Richard, S-155 30 Nykvarn (SE)
(74) Representative: Scania CV AB
(86) International application number: PCT/SE2011/050096
(87) International publication number: WO 2011/093788

(56) References cited:
- EP-A1- 1 555 461
- WO-A1-2008/036012
- DE-A1- 10 216 547
- GB-A- 2 232 453
- GB-A- 2 308 873
- GB-A- 2 329 442
- GB-A- 2 354 294
- JP-A- H0 979 374
- US-A1- 2004 106 495
- Tom And Ray: "Is keeping your clutch pressed in such a bad idea? Find out.", , 1 November 2009 (2009-11-01), XP055453959, Retrieved from the Internet: URL:https://www.cartalk.com/content/keepin g-your-clutch-pressed-such-bad-idea-find-o ut [retrieved on 2018-02-23]

## Description

### Field of the invention

The present invention relates to a method for use with automatically controlled clutches in vehicles. The invention relates in particular to a method according to the preamble of claim 1 for control of a vehicle's clutch which is controlled by a vehicle control system.

### Background to the invention

There are many different variants of power trains for vehicles. It is often desirable that heavy vehicles be drivable as comfortably as possible for the driver. This means, for example, that the gear changes of the gearbox should be executed automatically by the control system usually incorporated in the vehicle. Gearboxes which change gear automatically are therefore also usual in heavy vehicles.

This automatic gear changing is usually effected not by automatic gearboxes in a traditional sense but by gear changes in "manual" gearboxes being controlled by a control system, partly because manual gearboxes are substantially less expensive to make, but also because of their greater efficiency compared with a conventional automatic gearbox. The efficiency of automatic gearboxes of the type usually incorporated in passenger cars is often too low, compared with a manually operated gearbox, for them to be justified.

For this reason, automatically operated "manual" gearboxes are commonly used, particularly for heavy vehicles which are largely used in agriculture or on motorways.

The actual gear change method in such gearboxes may vary, and in one type of method a clutch pedal is only used for setting the vehicle in motion from stationary, whereas gear changes when the vehicle is already in motion are effected by the vehicle's control system without using the clutch, by the torque delivered from the engine being adjusted to a suitable level in order to reduce the torque transmitted at the engagement point of the relevant gears.

Another type of method uses instead a clutch which is automatically controlled during upshifts/downshifts, so the driver has access to only an accelerator pedal and a brake pedal, precisely as in a vehicle with conventional automatic gear changing.

Control of the automatically controlled clutch is conducted by using the vehicle's control system to control a clutch actuator. The clutch actuator may for example comprise one or more pneumatically controlled pistons acting upon a lever, whereby the clutch is opened/closed by a lever movement effected by said pistons. The clutch actuator may also be of electrical type.

The amount of activation of a manual clutch is normally less than the amount of use to which a clutch/clutch actuator is put to during automatic control by means of the vehicle's control system. For example, the vehicle's control system may slide on the clutch during relatively long periods, e.g. in order to achieve as comfortable gear changing as possible, or when moving off from stationary in a relatively high initial gear.

EP 1 555 461 A1 discloses an apparatus for controlling an automatic transmission comprising: a vehicle drive system in which a gear type transmission and a friction clutch are connected in series, a gear changing device for changing said gear type transmission, a clutch drive device for disengaging and engaging said friction clutch. Before a vehicle stops, the friction clutch is disengaged and the gear type transmission is changed to the neutral position.

As an automatically controlled clutch is commonly used more frequently than a manually controlled clutch, this type of clutch is also subject to more wear. There is therefore a need for a method for avoiding unnecessary clutch wear in automatically controlled clutches.

### Summary of the invention

An object of the present invention is to propose a method for control of a vehicle clutch which is controlled by a control system, such that the wear for said clutch can be reduced. This object is achieved with a method according to claim 1.

When, in particular, a heavy vehicle is braked to a halt, the clutch is usually opened to disconnect the vehicle's engine from the gearbox, making it possible for the vehicle to come to a halt with a gear engaged in the gearbox. When the vehicle has thus come to a halt, this situation with clutch open and gear engaged may continue for lengthy periods, which may lead to wear on the constituent parts of the clutch. For example, it is usual for a disconnecting bearing to be arranged to be rotatable about the gearbox input shaft. This disconnecting bearing rotates at the same speed as the engine's output shaft, and when the gearbox input shaft is motionless (while the vehicle is stationary) the disconnecting bearing rotates relative to the gearbox input shaft when the clutch is open. Keeping the clutch open for lengthy periods of time may lead to premature wear of the disconnecting bearing.

The present invention affords the advantage that the period while the clutch is open with the vehicle stationary can be reduced, making it possible to reduce the vehicle's repair requirements, while at the same time the clutch is kept open long enough for there to be no need for driver comfort to be affected during normal driving of the vehicle.

Moreover, automatically controlled clutches are usually controlled via a clutch actuator. The latter may be of various different types and may for example be an electrical clutch actuator. The clutch actuator is subject during use to significant self-generated warming, and in the commonly occurring situation of being in surroundings at a high ambient temperature the combined temperature rise may cause one or more of the clutch actuator's components to become overheated. The risk of such overheating can be reduced by the reduced use of the clutch according to the present invention.

Said first period may also be longer than said 60 seconds, e.g. any desired number of seconds within any of the following ranges: 60-600 seconds, 120-600 seconds, 150-600 seconds or 180-600 seconds.

Further characteristics of the present invention and advantages thereof are indicated by the detailed description set out below of embodiment examples and the attached drawings.

### Brief description of the drawings

- Fig. 1a: depicts a power train in a vehicle in which the present invention may with advantage be used.
- Fig. 1b: depicts an example of a control unit in a vehicle control system.
- Fig. 2: depicts in more detail a clutch and a clutch actuator for the vehicle depicted in Fig. 1a.
- Fig. 3: is a flowchart illustrating an example of a method for control of the clutch actuator according to an example of an embodiment of the present invention.

### Detailed description of embodiment examples

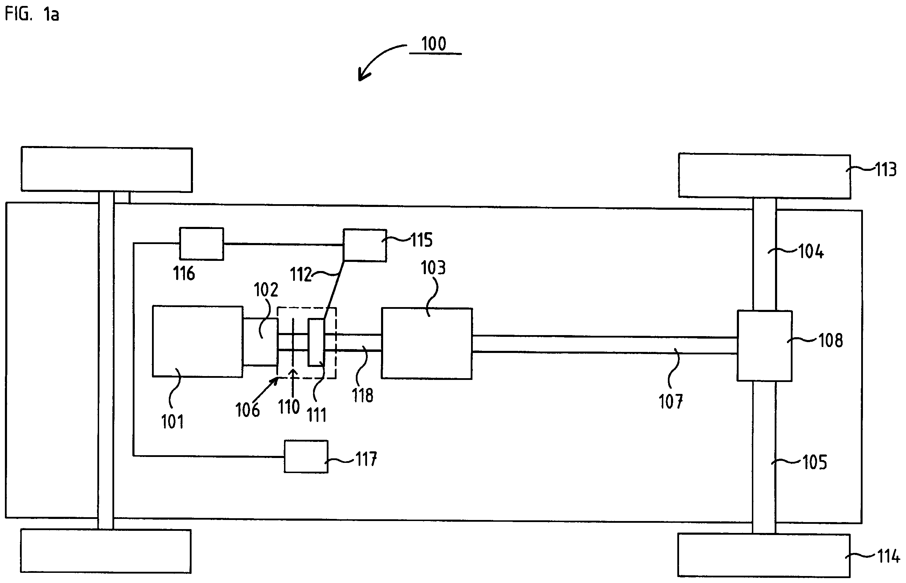

Fig. 1a depicts an example of a power train in a heavy vehicle 100, e.g. a truck, bus or the like, according to an example of an embodiment of the present invention. The vehicle 100 schematically depicted in Fig. 1a comprises only one axle with powered wheels 113, 114 but the invention is also applicable in vehicles which have more than one axle provided with powered wheels. The power train comprises a combustion engine 101 connected in a conventional way, via an output shaft 102 of the engine 101, usually via a flywheel (not depicted), to an automatically operated gearbox 103 via a clutch 106.

However, heavy vehicles used largely in agriculture or on motorways are usually provided, as mentioned above, not with automatic gearboxes in a traditional sense but with "manual" gearboxes in which gear changes are controlled by a control system. This is partly because manual gearboxes are substantially less expensive to manufacture, but also because of their greater efficiency and consequently lower fuel consumption.

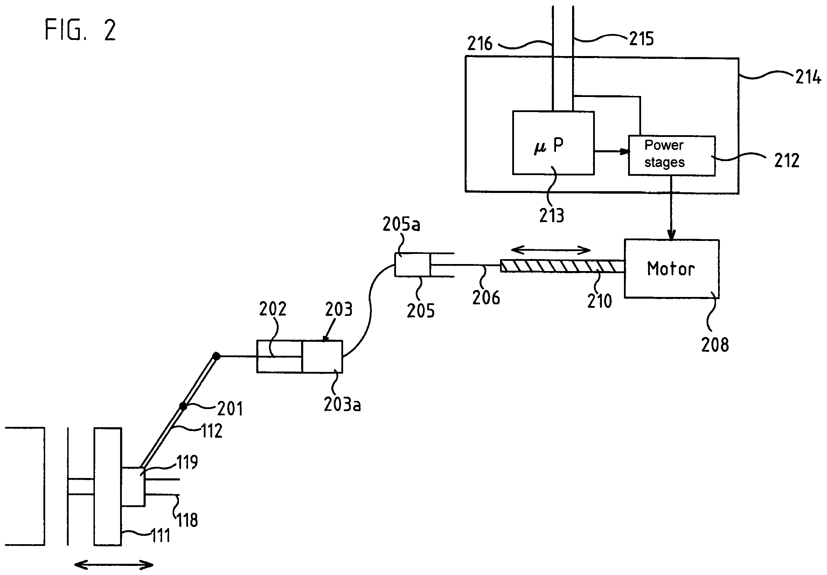

The clutch 106 takes the form of an automatically controlled clutch. The clutch 106 is also of disc type whereby a friction element (disc) 110 connected to a first gearbox element, e.g. the input shaft 118 of the gearbox 103, engages selectively with the engine's flywheel 102 to transmit driving force from the combustion engine 101 to powered wheels 113, 114 via the gearbox 103. The engagement of the clutch disc 110 with the engine's output shaft 102 is controlled by means of a pressure plate 111 which is movable sideways, e.g. by a lever 112, the function of which is controlled by a clutch actuator 115. The influence of the clutch actuator 115 upon the lever 112 is controlled by the vehicle's control system, in this case by means of a control unit 116. The clutch actuator is described in more detail below with reference to Fig. 2.

Control systems in modern vehicles usually consist of a communication bus system comprising one or more communication buses for connecting together a number of electronic control units (ECUs), or controllers, and various components located on the vehicle. Such a control system may comprise a large number of control units, and the responsibility for a specific function may be divided between two or more of them.

For the sake of simplicity, Fig. 1a depicts only two such electronic control units 116, 117 which respectively control in this embodiment the engine 101 and clutch 106 and the gearbox 103 (two or more from among engine, gearbox and clutch may alternatively be arranged to be controlled by one and the same control unit or by other undepicted control units).

Control units of the type depicted are normally adapted to receiving sensor signals from various parts of the vehicle, e.g. from gearbox, engine, clutch and/or other control units or components located on the vehicle. The control of the control units normally depends on signals from other control units, e.g. the control of the clutch actuator 115 by the control unit 116 will probably depend, for example, on information received from, for example, the control unit which is responsible for the function of the gearbox 103, and from the control unit/units which control engine functions, e.g. the control unit 117.

The control units are further adapted to delivering control signals to various parts and components of the vehicle, e.g. engine, clutch and gearbox, for their control. The present invention may be implemented in any of the above control units, or in some other suitable control unit in the vehicle's control system.

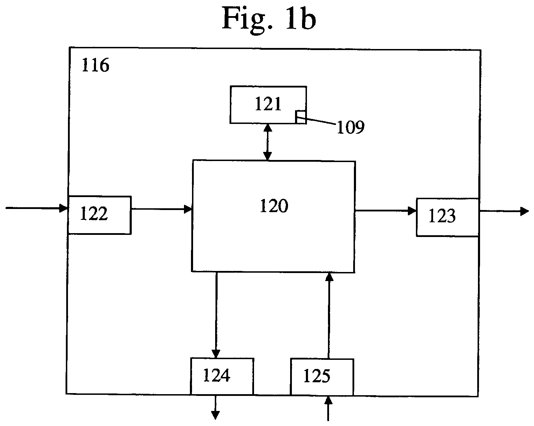

The control of various parts and components in the vehicle, e.g. the clutch actuator and the engagement/disengagement of gears in the gearbox, is often governed by programmed instructions. These programmed instructions take typically the form of a computer programme which, when executed in a computer or control unit, causes the computer/control unit to effect desired forms of control action, e.g. method steps according to the present invention. The computer programme usually takes the form of computer programme products 109 which are stored on a digital storage medium 121 (see Fig. 1b), e.g. ROM (read-only memory), PROM (programmable read-only memory), EPROM (erasable PROM), flash memory, EEPROM (electrically erasable PROM), a hard disc unit etc., in combination with or in the control unit, and are executed by the control unit. The vehicle's behaviour in a specific situation can therefore be adjusted by altering the computer programme's instructions.

An example of a control unit (the control unit 116) is depicted schematically in Fig. 1b and may comprise a calculation unit 120 which may take the form of substantially any suitable type of processor or microcomputer, e.g. a circuit for digital signal processing (Digital Signal Processor, DSP), or a circuit with a predetermined specific function (Application Specific Integrated Circuit, ASIC). The calculation unit 120 is connected to a memory unit 121 which is situated in the control unit 116 and which provides the calculation unit 120 with, for example, the stored programme code 109 and/or the stored data which the calculation unit 120 needs in order to be able to perform calculations. The calculation unit 120 is also adapted to storing partial or final results of calculations in the memory unit 121.

The control unit 116 is further provided with respective devices 122, 123, 124, 125 for receiving and sending input and output signals. These input and output signals may comprise waveforms, pulses or other attributes which the input signal receiving devices 122, 125 can detect as information and which can be converted to signals processable by the calculation unit 120. These signals are then supplied to the calculation unit 120. The output signal sending devices 123, 124 are adapted to converting signals received from the calculation unit 120 in order, e.g. by modulating them, to create output signals which can be transmitted to other parts of the vehicle's control system and/or the component/components for which they are intended.

Each of the connections to the respective devices for receiving and sending input and output signals may take the form of one or more from among a cable, a data bus, e.g. a CAN (Controller Area Network) bus, a MOST (Media Orientated Systems Transport) bus or some other bus configuration, or a wireless connection.

The vehicle 100 further comprises drive shafts 104, 105 connected to its powered wheels 113, 114 and driven by an output shaft 107 from the gearbox 103 via a final gear 108, e.g. a conventional differential.

Fig. 2 depicts the clutch actuator 115 in more detail. The clutch actuator depicted in Fig. 2 is an example of an electrically controlled clutch actuator. As mentioned above, the clutch is operated by the clutch actuator 115 opening/closing it by using the lever 112 to move the pressure plate 111 in axial directions along the gearbox input shaft 118.

The lever pivots about a pivot pin 201 and the movement of the lever is controlled by a piston 202 acting in a hydraulic cylinder 203. The lever is connected to the pressure plate 111 via a disengaging (clutch release) bearing 119. The disconnecting bearing and the pressure plate are linked together via an intermediate spring (not depicted) such that when the lever pulls in the disconnecting bearing (i.e. moves the disconnecting bearing to the right in the diagram, which shows the disconnecting bearing in the extreme right position, i.e. with the clutch fully open) the pressure plate will (via the spring) pull apart (open) the clutch. Conversely, the spring will push the flywheel, the disc and the pressure plate together (i.e. close the clutch) when the force exerted upon the lever by the piston 202 decreases.

The cylinder 203 receives its control pressure from a second hydraulic cylinder 205. The cylinder 205 comprises a movable piston 206, the movement of which is controlled by a threaded rod 210 whose own movement is controlled by an electric motor 208.

The rotation of the electric motor 208 is converted to linear motion of the threaded rod 210 by means of a ball screw (not depicted). The ball screw is rotated by the electric motor 208, making it possible for the threaded rod to be moved to and fro in the direction of the arrows by rotation of the electric motor and hence of the ball screw, and the linear motion of the threaded rod is converted to linear motion of the piston 206.

Movement of the piston 206 into the cylinder 205 (i.e. to the left in the diagram) increases the hydraulic pressure in the pressure chamber 205a and hence also the pressure in the pressure chamber 203a in the cylinder 203, which is connected to the pressure chamber 205a. When the pressure generated by the piston 206 in the pressure chamber 203a (205a) exerts a force on the piston 202 which exceeds the force exerted by the spring between the pressure plate and disconnecting bearing, the clutch will therefore open as above. When thereafter the pressure in the pressure chamber 203a drops because the direction of rotation of the motor is reversed so that the piston 206 moves to the right in the diagram, the clutch will close once the spring force exceeds the force exerted by the hydraulic fluid.

The electric motor makes it possible to achieve very rapid opening/closing of the clutch while at the same time the position of the lever, and hence of the pressure plate, is controlled with very great precision to effect opening/closing of the power train (by means of the clutch) in such a way as to be as imperceptible to the driver as possible. The electric motor 208 may be of any suitable type. The electric motor 208 is powered via power stages 212, with power circuits, e.g. comprising two transistors for each phase winding. Opening/closing of the transistors is controlled by a microprocessor 213 which may be incorporated together with said power stages 212 on a circuit card 214. The microprocessor 213 and the power stages 212 are powered via a power supply 215, and the microprocessor receives control signals 216, e.g. from the control unit 116, for appropriate modulation of said power stages and hence the electric motor to effect desired opening/closing of the clutch.

As mentioned above, the pressure plate 111 rotates with the engine's output shaft. The pressure plate 111 is also connected to the gearbox input shaft. When the clutch is closed, its discs (and therefore the gearbox input shaft), the pressure plate and the disconnecting bearing therefore rotate with the engine's output shaft. This means that when the clutch is closed the disconnecting bearing 119 and the gearbox input shaft are coupled together in rotation, with consequently no relative rotation between them, while at the same time the lever exerts no pulling force on the disconnecting bearing 119.

In contrast, if the clutch is open, the lever 112 will exert upon the disconnecting bearing 119 a relatively large axial force while at the same time the disconnecting bearing is also acted upon rotationally. When the clutch is open, the disconnecting bearing is thus adversely affected compared with when the clutch is closed. Repeatedly keeping the clutch open for lengthy periods may lead to premature wear of the disconnecting bearing.

Moreover, owing to the forces involved in, and the rapidity required for, opening/closing of the clutch, the electric motor draws a great deal of current during said opening/closing, leading to warming of both the electric motor 208 and its power stages 212. If said power stages 212 are on the same circuit card 214 as the microprocessor 213 as above, heat is also transferred to the latter. Moreover, the clutch actuator is usually situated on the gearbox, i.e. close to the combustion engine, which means that the clutch actuator's surroundings may be very warm. This leads to its components being warmed not only by use during opening/closing of the clutch but also by thermal radiation from the engine. There is also warming by heat flow through the material of the gearbox.

All this warming may result in one or more of the clutch actuator's components becoming overheated, e.g. the microprocessor and/or one or more power circuits and/or the electric motor. Overheating of any of the clutch actuator's components is likely to cause permanent damage possibly necessitating replacement of the clutch actuator. This leads to the vehicle becoming undrivable and needing to be towed to a workshop. The parallel patent application **"Method and system pertaining to an automatically controlled clutch"** (Swedish patent application number 1050097-3) with the same filing date as the present application, and the same applicant, refers to a solution for reducing the risk of such overheating of the clutch actuator. The fact that the present invention reduces the use of the clutch actuator reduces the risk of such overheating.

It should be noted that Fig. 2 depicts merely a schematic example of an electrically controlled clutch actuator and that electrically controlled clutch actuators according to various different principles are described in prior art. The present invention is applicable irrespective of the particular configuration of the clutch actuator.

Moreover, the present invention is not confined to electrically controlled clutch actuators, as it is equally applicable with other types of actuators, e.g. pneumatic actuators, since solutions of other types often likewise involve, for example, disconnecting bearings and/or clutch actuator components which may suffer damage by the clutch being kept open for lengthy periods.

It is therefore important that the clutch be not kept open unnecessarily, to avoid causing undesirable shortening of the service life of the components, with consequent repair costs.

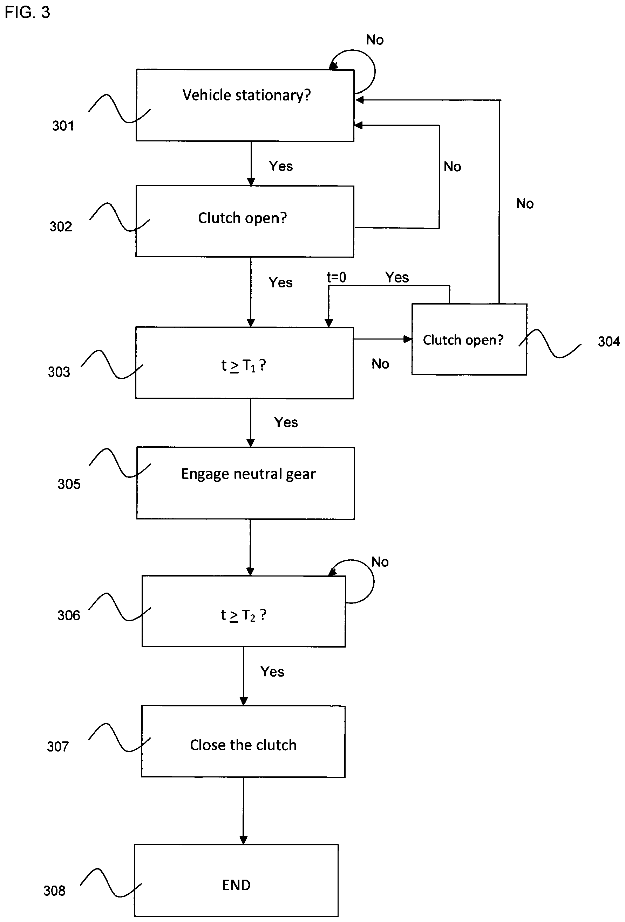

The present invention proposes a method for reducing the risk that such damage might occur. An embodiment example 300 according to the present invention is depicted in Fig. 3. The present invention limits the amount of time for which the clutch is allowed to remain in an open position with the vehicle stationary.

Step 301 determines whether the vehicle is stationary. So long as the vehicle is not stationary, the method remains at step 301. If the vehicle is stationary, however, the method moves on to step 302, which determines whether the clutch is open. If the clutch is closed, the method goes back to step 301, but if the clutch is open, the method moves on to step 303 while at the same time a timer t is set running. The calculation of said first period may thus commence immediately once said vehicle has come to a halt. In an alternative embodiment, the timer may be set running already before the vehicle has come to a halt, e.g. when it is below a very low speed, e.g. 1 km/h, since at such a low speed it is likely that the vehicle will very soon be completely stationary. In this case, however, the timer t is set in such a way that the vehicle will reliably have been stationary for at least 60 seconds.

Step 303 determines whether the timer t has counted to a value corresponding to or greater than a time T₁. If such is not the case, the method moves on to step 304, which determines whether the clutch is still open. If it is not, the method goes back to step 301, otherwise it reverts to step 303 to determine again whether the timer t has counted to time T₁. Steps 303, 304 are repeated until either the clutch closes or time T₁ is reached, in which case the method moves on to step 305. The calculation of time t should stop once the vehicle is no longer stationary, so steps 303 and/or 304 also comprise a check that the vehicle is still stationary, and the method ends if such is not the case.

Time T₁ is a long time relative to how long it normally takes to open/close a clutch, and is at least 60 seconds. However, it is often advantageous if time T₁ is still longer, e.g. 120 seconds, 180 seconds, 240 seconds or 300 seconds or some other desired number of seconds more than 60. The reason for this is explained below.

Step 305 puts the gearbox into neutral gear to make closure of the clutch possible without the vehicle's engine being connected to its powered wheels, which would cause the vehicle to move. The method then moves on to step 306, which determines whether a time greater than or equal to a time T₂ has elapsed. The method remains at step 306 so long as time T₂ has not been reached. Time T₂ may be very close to time T₁, e.g. a fraction of a second, or be only a few seconds after time T₁ has been reached. Time T₂ may also be of the same order of magnitude as time T₁, or even be longer than time T₁. When time T₂ has been reached, the method moves on to step 307, which closes the clutch. The method then ends at step 308.

The method according to the present invention provides assurance that the clutch is not kept open for unnecessarily long periods. As mentioned above, time T₁ is at least 60 seconds but in many situations it may preferably be longer. For example, the method according to the present invention should preferably not be applied in situations such as when the vehicle is stationary at a red traffic signal.

The reason for this is that the gearbox being put into a neutral state will already cause discomfort for the driver if a gear has to be engaged at the precise moment of setting the vehicle in motion. If the clutch has also been closed, this means that the gearbox input shaft has begun to turn, and since in many cases this shaft has no braking facility, engaging a gear when the input shaft is rotating may result in a jerk in the power train which will be viewed negatively by the vehicle's driver. If the vehicle often comes to a halt at red traffic signals and such situations therefore recur, this may be irritating to the driver, so time T₁ is preferably set to a point in time which results in the present invention not being applied on the occasion of ordinary halts at red traffic signals.

Heavy vehicles in particular may be stationary for very long periods with the engine running in gear and the clutch open. The present invention therefore affords the advantage that the period for which the clutch is open in such situations can be reduced, thereby reducing the vehicle's repair requirements without affecting driver comfort during normal driving of the vehicle.

The setting of time T₁ may be determined in advance, but may also be determined by the vehicle's control system, e.g. by storing information about the length of time of the halts which the vehicle has historically undergone since the journey started, or over a certain period of time, in which case time T₁ is determined on the basis of these data.

In the embodiment referred to above, the method according to the present invention is applied when the vehicle is stationary with the clutch open. This method is supplemented by a further criterion. The above method is combined with detection of driver presence, e.g. the method may be arranged to be applied only if driver presence cannot be detected, in which case it may be assumed that he/she has left the cab. If it can be detected, or is assumed to be likely, that the driver is in the cab, it may be desirable for the above method not to be applied, to allow the driver to continue the journey when he/she wishes.

In an alternative embodiment, the above time T₁ may be altered to a longer time T₁₁ for the case where no driver presence is detected, in order thereby to reduce the risk of driver discomfort, while at the same time the clutch may still be closed when the longer time T₁₁ has passed, instead of continuing to be open.

There are various different ways of detecting driver presence, e.g. he/she may be assumed to be present if one or more of the following criteria are fulfilled:
- vehicle's parking brake not applied,
- brake pedal and/or accelerator pedal applied,
- detectable movement of gear lever or some other control, and/or driver input via, for example, display or keyboard. Although various embodiments of the present invention are exemplified above, specialists in the particular field will appreciate that variations and modifications are feasible without deviating from the invention. The invention is therefore not limited other than as indicated in the attached claims.

## Claims

1. A method for control of a vehicle (100), comprising a clutch (106) that is controlled by a vehicle control system and is adapted to selectively connecting an engine (101) to a gearbox (103), wherein, when said vehicle (100) is stationary and the clutch (106) is open, said method comprises:
- putting said gearbox (103) into a neutral state at a first point in time after the vehicle has been stationary for a first period, and
- closing said clutch (106) at a second point in time when a second period has passed since said first point in time **characterised in that** said first period is at least 60 seconds, and either
said method is applied only when no presence of a driver of the vehicle is detected, or
said first period is set to a longer time when the presence of a driver of the vehicle (100) is detected than when no presence of a driver of the vehicle (100) is detected.

2. A method according to claim 1, **characterised in that** said first period may be any desired length of time within the range 60-600 seconds.

3. A method according to either of claims 1 and 2, **characterised in that** the calculation of said first period commences immediately when said vehicle (100) has come to a halt.

4. A method according to any one of claims 1-3, **characterised in that** the time between said first point in time and said second point in time is substantially shorter than said first period.

5. A method according to any one of claims 1-4, **characterised in that** it further comprises:
- determining the length of time of a plurality of halts undergone historically by the vehicle (100), and
- using the vehicle's control system (116) to determine said first period on the basis of information about the length of time of said plurality of halts.

6. A method according to any one of claims 1-5, **characterised in that** the presence of a driver of the vehicle (100) is determined by one or more of the following:
- parking brake of vehicle (100) not applied,
- brake pedal and/or accelerator pedal applied,
- detectable movement of gear lever or some other control, and/or driver input via, for example, display or keyboard.

7. A method according to any one of the foregoing claims, **characterised in that** opening and/or closing of said clutch (106) are effected by means of an electrically controlled clutch actuator (115).

8. A method according to any one of the foregoing claims, **characterised in that** said method is applied when said gearbox (103) is in some other gear than neutral.

9. A computer programme comprising programme code, **characterised in that** when said programme code is executed in a vehicle control system controlling a vehicle comprising a clutch (106) selectively connecting an engine (101) to a gearbox (103) it causes said vehicle control system to apply the method according to any one of claims 1-8.

10. A computer programme product comprising a computer-readable medium and a computer programme according to claim 9, **characterised in that** said computer programme is contained in said computer-readable medium.

## Patentansprüche

1. Verfahren zur Steuerung eines Fahrzeugs (100), das eine Kupplung (106) aufweist, die von einem Fahrzeugsteuersystem gesteuert wird und geeignet ist, einen Motor (101) selektiv mit einem Getriebe (103) zu verbinden, wobei, wenn das Fahrzeug (100) steht und die Kupplung (106) geöffnet ist, das Verfahren umfasst:
- Versetzen des Getriebes (103) in einen neutralen Zustand zu einem ersten Zeitpunkt, nachdem das Fahrzeug für einen ersten Zeitraum gestanden hat, und
- Schließen der Kupplung (106) zu einem zweiten Zeitpunkt, wenn ein zweiter Zeitraum seit dem ersten Zeitpunkt vergangen ist,
**dadurch gekennzeichnet, dass** der erste Zeitraum mindestens 60 Sekunden beträgt, und
entweder das Verfahren nur angewendet wird, wenn keine Anwesenheit eines Fahrers des Fahrzeugs erfasst wird, oder
der erste Zeitraum auf eine längere Zeit eingestellt wird, wenn die Anwesenheit eines Fahrers des Fahrzeugs (100) erfasst wird, als wenn keine Anwesenheit eines Fahrers des Fahrzeugs (100) erfasst wird.

2. Verfahren nach Anspruch 1, **dadurch gekennzeichnet, dass** der erste Zeitraum eine beliebige Zeitspanne in dem Bereich von 60 bis 600 Sekunden sein kann.

3. Verfahren nach einem der Ansprüche 1 und 2, **dadurch gekennzeichnet, dass** die Berechnung des ersten Zeitraums unmittelbar beginnt, wenn das Fahrzeug (100) zum Stillstand gekommen ist.

4. Verfahren nach einem der Ansprüche 1 bis 3, **dadurch gekennzeichnet, dass** die Zeit zwischen dem ersten Zeitpunkt und dem zweiten Zeitpunkt wesentlich kürzer ist als der erste Zeitraum.

5. Verfahren nach einem der Ansprüche 1 bis 4, **dadurch gekennzeichnet, dass** es ferner umfasst:
- Bestimmen der Zeitspanne einer Vielzahl von Haltevorgängen die das Fahrzeug (100) in der Vergangenheit durchlaufen hat, und
- Verwenden des Fahrzeugsteuersystems (116), um den ersten Zeitraum auf der Grundlage von Informationen über die Zeitspanne der Vielzahl von Haltevorgängen zu bestimmen.

6. Verfahren nach einem der Ansprüche 1 bis 5, **dadurch gekennzeichnet dass** die Anwesenheit eines Fahrers des Fahrzeugs (100) durch einen oder mehrere der folgenden Punkte bestimmt wird:
- Feststellbremse des Fahrzeugs (100) nicht angezogen,
- betätigtes Bremspedal und/oder Gaspedal,
- detektierbare Bewegung des Schalthebels oder einer anderen Steuerung und/oder Fahrereingaben, z. B. über ein Display oder eine Tastatur.

7. Verfahren nach einem der vorangehenden Ansprüche, **dadurch gekennzeichnet, dass** ein Öffnen und/oder Schließen der Kupplung (106) mittels eines elektrisch gesteuerten Kupplungsaktuators (115) erfolgt.

8. Verfahren nach einem der vorangehenden Ansprüche, **dadurch gekennzeichnet, dass** das Verfahren angewendet wird, wenn sich das Getriebe (103) in einem anderen Gang als dem Leerlauf befindet.

9. Computerprogramm, das Programmcode umfasst, **dadurch gekennzeichnet, dass**, wenn der Programmcode in einem Fahrzeugsteuersystem, das ein Fahrzeug steuert, das eine Kupplung (106) aufweist, die einen Motor (101) selektiv mit einem Getriebe (103) verbindet, ausgeführt wird, es das Fahrzeugsteuersystem veranlasst, das Verfahren nach einem der Ansprüche 1 bis 8 anzuwenden.

10. Computerprogrammprodukt, das ein computerlesbares Medium und ein Computerprogramm nach Anspruch 9 umfasst, **dadurch gekennzeichnet, dass** das Computerprogramm in dem computerlesbaren Medium enthalten ist.

## Revendications

1. Procédé de commande d'un véhicule (100), comprenant un embrayage (106) qui est commandé par un système de commande de véhicule et est adapté pour raccorder sélectivement un moteur (101) à une boîte de vitesses (103), dans lequel, lorsque ledit véhicule (100) est immobile et que l'embrayage (106) est ouvert, ledit procédé comprend :
- la mise de ladite boîte de vitesses (103) au point mort à un premier moment dans le temps après que le véhicule a été à l'arrêt pendant une première période, et
- la fermeture dudit embrayage (106) à un second moment dans le temps lorsqu'une seconde période s'est écoulée depuis ledit premier moment dans le temps **caractérisé en ce que** ladite première période est d'au moins 60 secondes, et soit
ledit procédé est appliqué uniquement lorsqu'aucune présence d'un conducteur du véhicule n'est détectée, soit
ladite première période est établie à un temps plus long lorsque la présence d'un conducteur du véhicule (100) est détectée que lorsqu'aucune présence d'un conducteur du véhicule (100) n'est détectée.

2. Procédé selon la revendication 1, **caractérisé en ce que** ladite première période peut être une durée quelconque souhaitée dans la plage de 60 à 600 secondes.

3. Procédé selon l'une quelconque des revendications 1 et 2, **caractérisé en ce que** le calcul de ladite première période commence immédiatement lorsque ledit véhicule (100) s'est arrêté.

4. Procédé selon l'une quelconque des revendications 1 à 3, **caractérisé en ce que** le temps entre ledit premier point dans le temps et le second point dans le temps est sensiblement plus court que ladite première période.

5. Procédé selon l'une quelconque des revendications 1 à 4, **caractérisé en ce qu'**il comprend en outre :
- la détermination de la durée d'une pluralité d'arrêts subis historiquement par le véhicule (100), et
- l'utilisation du système de commande de véhicule (116) pour déterminer ladite première période sur la base d'informations concernant la durée de ladite pluralité d'arrêts.

6. Procédé selon l'une quelconque des revendications 1 à 5, **caractérisé en ce que** la présence d'un conducteur du véhicule (100) est déterminée par un ou plusieurs parmi les suivants :
- frein de stationnement du véhicule (100) non actionné,
- pédale de frein et/ou pédale d'accélérateur actionnée,
- mouvement détectable du levier de vitesse ou d'une autre commande, et/ou entrée du conducteur via, par exemple, un écran ou un clavier.

7. Procédé selon l'une quelconque des revendications précédentes, **caractérisé en ce que** l'ouverture et/ou la fermeture dudit embrayage (106) sont effectuées au moyen d'un actionneur d'embrayage (115) commandé électriquement.

8. Procédé selon l'une quelconque des revendications précédentes, **caractérisé en ce que** ledit procédé est appliqué lorsque ladite boîte de vitesses (103) est dans une autre vitesse que le point mort.

9. Programme informatique comprenant un code de programme, **caractérisé en ce que**, lorsque ledit code de programme est exécuté dans un **système de commande de** véhicule commandant un véhicule comprenant un embrayage (106) raccordant sélectivement un moteur (101) à une boîte de vitesses (103), il amène ledit système de commande de véhicule à appliquer le procédé selon l'une quelconque des revendications 1 à 8.

10. Produit de programme informatique comprenant un support lisible par ordinateur et un programme informatique selon la revendication 9, **caractérisé en ce que** ledit programme informatique est contenu dans ledit support lisible par ordinateur.
